Europäisches Patentamt

European Patent Office

Office européen des brevets

(19)

(11) **EP 0 472 754 B1**

(12) **EUROPEAN PATENT SPECIFICATION**

(45) Date of publication and mention
of the grant of the patent:
**28.02.1996 Bulletin 1996/09**

(51) Int Cl.[6]: **G06F 15/16**

(21) Application number: **90116447.5**

(22) Date of filing: **28.08.1990**

(54) **Multiprocessor system having selective global data replication**

Mehrprozessorsystem mit selektiver Globaldatenvervielfältigung

Système Multiprocesseur comprenant une reproduction sélective de données globales

(84) Designated Contracting States:
**BE CH DE FR GB IT LI**

(43) Date of publication of application:
**04.03.1992 Bulletin 1992/10**

(73) Proprietor: **BULL HN INFORMATION SYSTEMS
ITALIA S.p.A.
I-10014 Caluso (Torino) (IT)**

(72) Inventor: **Bagnoli, Carlo
I-20147 Milano (IT)**

(74) Representative: **Falcetti, Carlo et al
I-20122 Milano (IT)**

(56) References cited:
EP-A- 0 367 702        EP-A- 0 369 265
US-A- 4 007 450

• AFIPS CONFERENCE PROCEEDINGS,
Anaheim, CA, 16th - 19th May 1983, pages
557-564; S.L. LILLEVIK et al.: "A
multiprocessor with replicated shared
memory"

## Description

The present invention relates to a multiprocessor system having selective global data replication.

It is known from european patent publications EP-A-0320607 and EP-A-0369265 that, in order to enhance the performance of a multiprocessor system in which a plurality of central processing units (CPU) communicate each with the other and with common resources (mass memories, I/O devices) through a systems bus, each CPU is provided with a local working memory to which it get access through a local bus without need of access to the system bus, because each local memory stores the information used by the related CPU.

This implementation does not exclude the access to the local memory of another CPU for information exchange.

Data jointly used by a plurality of CPUs are defined as "global" and are replicated in each one of the local memories.

The above mentioned publications describe circuits and procedures which provide the consistency of the several copies of global data, in all local memories, by means of global data write operations performed in all local memories every time any one of the processors modifies or generates, that is writes a global data.

The global data write command, transferred on the system bus, is not selective and limits to identifying the operation as related to a global data, by means of an address field (or bit) which qualifies the data as global.

All processors detect the write command as related to a global data and perform the operation, returning a confirmation signal which assures the correctness of the performed operation.

A multiprocessor system where the global data replication is selective may be conceived.

The selective replication should be performed in the local memory of those processors only which need such global data.

The selection could be performed by means of write commands or write procedures which identify among the several processors, the ones only where the operation must be performed.

From a practical stand point an implementation of this kind would be so complicated and difficult to manage that all the advantage resulting from global data replication would be lost.

An example of such an architecture is described in US-A-4,007,450: in this case each processor, called node, is provided with a storage where information is kept of the used data which are also used by other processors as well as information as to which of the processors, among many, have copy of such data.

Therefore, every time a global data is modified, individual updating messages can be sent to each of the other processors which have copy of such data is order to assure consistency of such copies. Selective global data write is therefore achieved by multiple messages individually sent to each of the concerned processors by the processor which modifies a global data.

The process is very complicated and time consuming and further requires that each processor must know not only which are the global data but also which are the other processors with copy of the global data.

The european publication EP-A-92895 describes a multiprocessor system where each processor has its own local memory and the global data are replicated in each local memory.

The updating of the global data is performed by controlling a global data write operation by means of an interprocessors communication channel and by using a virtual address. All the processors detect the global write command and convert, the virtual address in a physical address, by means of their own memory management unit (MMU).

By this arrangement the global data replication may be selective, because some of the MMUs may indicate that the page is not present in the related local memory.

Several inconvenients result from this approach.

They are: conflicts in accessing the MMU, occupation of the local bus connecting processor and related local memory, need of bus watching by caches coupled to the local memories and consequent performance degradation.

In addition the proposed arrangement is unfeasible in case the MMU is integrated in the processor or in case the MMU does not provide full coverage of addresses, as is often the case.

These limitations and drawbacks are overcome by the multiprocessor system having selective global data replication which is the object of the present invention, as claimed in claim 1.

The multiprocessor system of the invention is provided with memory means or "directory" which for each address of a global data, to be replicated, the address being present on the system bus, defines if locally the global data has to be replicated or not and locally in each CPU selectively controls the activation of the write operation in the local memory by means of control circuit which enable to locally trap the global data write and to generate signals input to the system bus, the signals simulating an occurred execution of the write operation.

In this way, even if the global data write command is not selective and the control mechanisms which are implemented are those related to a non selective replication, the write operation is selectively performed. Moreover, the trapping of the global data write command is performed at interface level, in an interface module of each CPU, without affecting the local bus.

This leads to relevant advantages, not only in terms of memory space saving (the replication being only performed in the processors where it is mandatory) but also in terms of local bus occupation.

In the processors where the global write operation is trapped, the local bus remains free for the exchange of information other than global data and allows for execution of other operations such as access to local memory by the related processor.

Additionally, in the frequently occurring case in which a cache is provided in addition to the local memory, the so called "bus watching" operations, required to assure consistency of cache and local memory contents, when the local memory is written, are avoided.

These bus watching operations result in a "latency" that is a temporary unavailability of the cache to operate in order to provide information to the processor, hence in a performance degradation. Preferably the directory consists in a fast static memory (SRAM) addressed by an address field which defines a data page (4 Kbytes) and the global data capture is selectively performed by pages.

Therefore a 64 kbit RAM, available on the market as a single integrated circuit, allows for the selective trapping of global data pages in a global data space of 256 Mbytes.

Preferably the directory is preset at system start up so as to trap all the possible global data pages, except few ones.

In the course of operation, as the need arises, independently for each processor, the several directories are written so as to allow for the replication of the required pages.

Suitable logic circuits provide for these updating operations being performed without interfering with the control and trapping function which must be performed by the directory.

Preferably but not necessarily, the global data pages allocation is performed in physical memory pages autonomously selected by each processor by means of an address translation unit coupled to the local memory of each processor and additional to the MMU of each processor for converting a global data address, conventionally named as "real" and common at system level, in a physical address, specific for each local memory, as described in the European Patent Application N. 90104155.8.

By this arrangement the directory capacity may be commensurate to the maximum capacity of local memory intended for storing global data. The feature and the advantages of the invention will appear more clearly from the following description and the related drawings where:

- Figure 1 shows in block diagram a multiprocessor system having selective global data replication in accordance with the invention.
- Figure 2 shows the format of the addresses used in the system of Fig. 1.
- Figure 3 shows in block diagram a functional component of the system of Fig. 1, in the following named as isolation buffer.
- Figure 4 shows in block diagram two functional components of the system of Fig. 1, in the following named as interface and arbitration unit (INT & ARBT) and output block towards system bus (SBBOUT).
- Figure 5 shows in block diagram two functional components of the system of Fig. 1, in the following named as interface and arbitration unit (INT & ARBT) and input block to local bus from system bus (SBIN).
- Figure 6 shows in block diagram an alternative embodiment of the input block SBIN of Fig. 5.

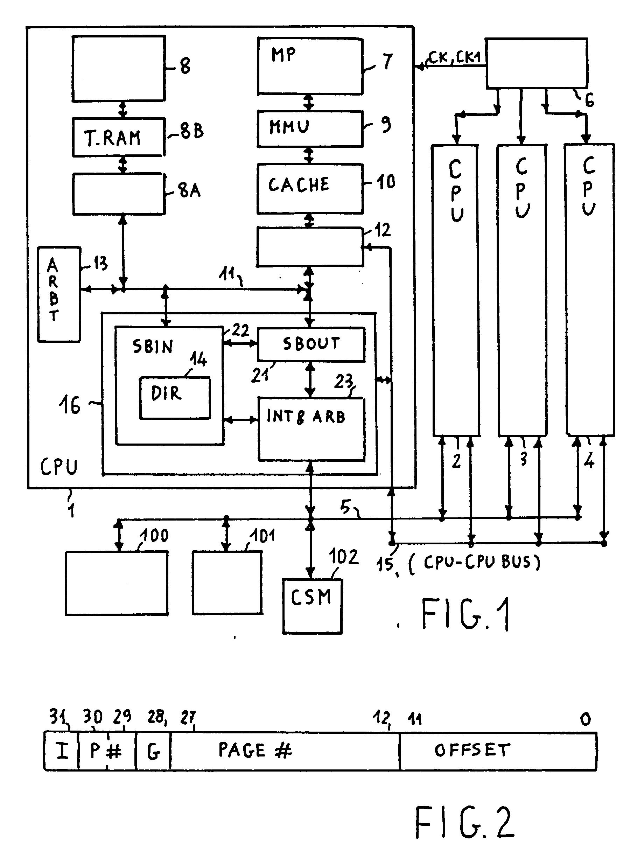

Figure 1 shows in block diagram a mutliprocessor system having selective global data replication in accordance with the present invention.

The system comprises four central processing units or CPUs 1,2,3,4.

The CPUs communicate each with the others and with mass memories 100, I/O devices 101 and a central service module CSM 102 through a system bus 5.

The operation of the CPUs is clocked by a timing unit 6 which basically generates a first periodic clock signal CK and a second periodic clock signal CK1 having a period multiple of the one of CK and synchronous with CK.

The internal architecture of the several CPUs is described with reference to CPU1.

CPU1 comprises a processor or microprocessor MP7, a main memory address management unit MMU9, a cache 10, a local bus 11, a local memory 8, an address translation unit 8B (T.RAM) a local bus arbitration unit (ARBT) 13 and an interface module 16 which connects the local bus 11 to the system bus 5.

Even if MMU9 and cache 10 are shown as blocks distinct from microprocessor MP7, they may be integral to MP 7 (as it is the case in the integrated circuits MOTOROLA 68030,68040).

The set MP7,MMU9, cache 8, communicates with the local bus through an isolation buffer 12.

Likewise the local memory 8 communicates with the local bus 11 through an isolation buffer 8A.

The interface unit 16 basically comprises an output buffer 21 (SBOUT), an input block (SBIN) and an interface and arbitration unit 23 (INT & ARBT) for arbitrating control on the system bus.

Block 21 (SBOUT) is used to request access to the system bus, through block 23, in order to perform read/write operation on resources external to CPU1 and to put read/write operation requests on the system bus.

Block 22 (SBIN) is used to receive, through block 23 and from system bus, read/write operation requests to be transferred to the local memory.

According to the invention, the interface module 16 and more precisely block 22, comprises a static memory 14 or directory (DIR), which indicates for each page of global data, if such page is locally present or is trashed.

The several CPUs 1,2,3,4 are interconnected by the system bus 5 (which may be a standard bus such as the one known as MULTIBUS II or (PSB) and by an auxiliary bus CPU-CPU BUS 15.

The auxiliary bus allows the several CPUs to know in real time the active/inactive state of the several CPUs and to exchange information on the occurred local execution of a global data write operation.

The features of this auxiliary bus are detailed in the european publication EP-A-0369265 and will be reconsidered in the following.

The use of a standard bus such as the MULTIBUS II as system bus implies that any entity, such as the interface unit 23 of a CPU, obtains access to the system bus as "agent" and references another entity, for instance the interface unit of another CPU, of an I/O controller or of the central service module CSM.

The addressed entity must act as a "replier" and interact with the agent in order to perform the hand-shaking communication protocol used by MULTIBUS II.

Figure 2 shows the format of the addresses used in the system of Fig. 1, as they are generated by processor MP7 (and the corresponding processor of the other CPUs) or converted by a MMU (such as 9) departing from virtual addresses generated by the related processor in the same CPU.

Each address comprises 32 bits.

The most significant bit 31, named I, when asserted indicates that the addressed space is an internal space.

The internal space is a local memory space if bits 30,29 are deasserted and an I/O or register space if one of the bits 30,29 is asserted.

For example bit 30 asserted and bit 29 deasserted may define a peripheral unit space, and bit 30 deasserted with bit 29 asserted may define a register space, in particular for the scope of the invention a register space referencing the directory 14.

If bit 31 is deasserted, the addressed space is a space external to the CPU and is considered as a memory space only.

In this case, bits 30,29 define the memory space as owned by the local memory of one of the four CPU by means of a CPU number (P#).

Bit 28, referenced as G, when the addressed space is a memory space has two important functions.

When asserted it indicates that the related address is a global data address.

When asserted and coupled with a write command it indicates that the write operation must be global, that is performed in the local memory of all CPUs.

When asserted it further indicates that the related address is an address conventionally defined as real, which must be converted in a physical address by using the translation unit 8B of Fig. 1.

If bit 28 is deasserted, the related address is already a physical memory address, does not require conversion and is related to an information local to one CPU (and identified by bits 31,30,29).

When the addressed space is a memory space, the bit field from bits 12 to 27 forms a page address PAGE# (one among 64K) and the bit field from Bit 0 to 11 forms an "offset" which does not change in the conversion of an address from virtual to real or physical and from real to physical.

The offsets define the location of the information byte within a page. By using this format for the addresses, the access to information in the system of Fig.1 occurs in the following way (if the information is not available in cache 10 and directly provided to the processor by the cache).

The information address, generated by processor 7 and in case converted by MMU9, is transferred to block 12 which, once received access to local bus by the arbitrating unit 13 and depending on the status of the most significant bits of the address, references either the local memory 8 or the interface module 16 and namely block 21.

The local memory 8 is selected in case the referenced space is an internal memory space and the referenced information is local (bit 31=1, bits 30,29=0, bit 28=0).

It is also selected in case of global data read (bit 28=1 coupled with a read command).

In all other cases, the interface module 16 is selected or one among a plurality of internal registers.Thus if the address of the information to be read or writted references an external space (or an I/O space), unit 23 obtains access to the system bus 5 and through the interface unit of the CPU or the I/O entity related to such external space, obtains or writes the information.

In case of global data write, block 12 gets access to the interface module 16 through local bus 11.

The interface module 16, once obtained access to the system bus, transfers on the system bus a global data write command, characterized by an address which references an external memory space as owned by any one of the CPUs (bit 31=0 bit 30/29=xx) and by the more the referenced information is global (bit 28=1).

All the interface modules such as 16 in the several CPUs, detects this address and each one of the modules references the related directory 14 with the bit fields 12-27 to establish if the data to be written pertains to a page which must be written or trashed.

If the data has to be written, the interface modules 16 obtains access to the local bus from arbitrator 13 and commands the write operation in the local memory (performed with the previous conversion of the real address in a physical address).

Once access to the local bus is obtained the interface module 16 may put a signal on the auxiliary bus 15. This signal indicates that the global data write operation has been locally performed.

If the data has to be trashed, the interface module 16 equally puts on auxiliary bus 15 the signals indicative of performed operation but the operation command is not transferred on the local bus and is trapped. In this way the CPU which has requested the global data write operation may detect if the request has been duly received and honoured by the active CPUs.

This is of essence to assure consistency of all the copies of the global data which is written.

Advantageously, in order to avoid dead locks and inconsistency and to minimize local bus occupation, the system makes use of the access mechanisms to the several resources described in the european publications EP-A-369264 and EP-A-369265.

These mechanisms may be summarized as follow.

Access to local bus is granted by arbiter 13 on the basis of a predetermined priority given to access requests which may be generated by local memory (LMRQ), by block 22 in the interface unit 16 (SBLM) or by block 21 (SBRQ).

Access to processor 7 is granted by default, that is if the other cited access requests are not present.

Correspondingly arbiter 13 generates the following granted access signals:

ENRLM:    to local memory for reconnection to local bus following a LMRQ request from local memory
ENSB:     access granted to block 22 (following SBLM request)
ENRSB:    access granted to block 21 (SBOUT) for reconnection to local bus following a SBRQ request.
ENCPU:    access granted (by default) to processor 7.

The used mechanism consists in the posting of write commands.

When access is granted to processor 7 and if a write command generated by processor 7 is present, block 12 get access to local bus 11 and by asserting a signal MPLM may post a write command, with related data and address, in block 8A and thereafter may free the local bus without waiting for completion of the write operation.

As an alternative, by means of signal MPSB asserted, block 12 may post the write command in block SBOUT 21, without waiting for the write command being transferred to the system bus and the operation performed.

Block 12 generates signal MPLM or MPSB as a function of the destination address of the write command.

In similar way, if a write command on the system bus has for destination the local memory 8 of CPU1, or if the write command is related to a global data, block 22 in CPU1 generates signal SBLM.

When block 22 receives signal ENSB from arbitrator 13, it posts the write command in block 8A and releases the local bus without waiting for completion of the operation.

In case of read operations the used mechanism consists in the posting of the read command, exactly as in the case of write operations, and in the subsequent reconnection to the local bus.

The reconnection is requested by the entity (local memory or block 21) which must provide the read data.

Thus the local memory 8, once activated by a read command either by block 12 (MPLM) or by block 22 (SBLM), once the data is available generates signal LMRQ and obtained access to the local bus by arbiter 13 (ENRLM) puts the data on the local bus.

Signal ENRLM is received by block 22 and block 12 too. These blocks, depending on their state may recognize themselves in a mutually exclusive way as destination of the data.

In the same way if a read command has been posted in block 21 SBOUT, on receipt of the read out data from the system bus, block 21 generates signal SBRQ and, once obtained access to the local bus by arbiter 13 (ENRSB), may put the read out data on the local bus.

ENRSB is received by block 12 too, which depending on its state may recognize itself as destination of the data and may transfer it to processor 7.

In a preferred embodiment of the invention, the same mechanisms are used to control write operations of directory 14 and to control selectively performed global write operations.

In order to control write operations of directory 14, block 12, based on an address which references the directory as destination, generates a selection signal MPDIR (if enabled by signal ENCPU) and posts the command in block 22, without waiting for its execution.

In order to control global write operations, block 12 generates signal MPSB and posts the command in block 21.

Block 21, in turns, instructs block 23 so as it obtains access to the system bus as agent and forwards the write command to a corresponding interface block of an active CPU, which acts as replier.

Once the global data write command is present on the system bus, it is a task of block 22 in all the active CPUs, to detect, based on the address present on the system bus, if the write operation is related to a global data and if it has to be performed or not.

The decision is taken based on the information provided by the related directory 14.

The description which follows, provides more details on the structure of blocks 12,21,22,23 limited to features useful for understanding the invention and with reference to the circuits required to perform the above mentioned operations.

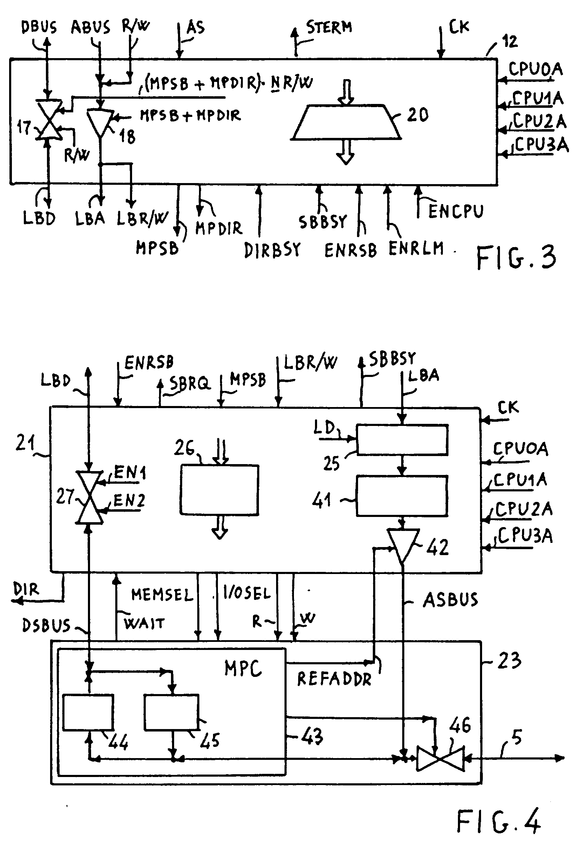

Figure 3 shows the isolation buffer 12 in block diagram.

Block 12 comprises a set of bidirectional gates 17 for connecting the data channel DBUS of processor MP7 to the a data channel LBD of the local bus, a set of tristate gates 18 for connecting the address channel ABUS of microprocessor MP7 to an address channel LBA of local 5 bus 11 and a combinatory network 20.

Gates 18 further control the read/write command (signal R/W) issued by processor MP7.

Network 20 generates control signals for gates 17,18 and signals in output from block 12 as a function of the signals received from MP7 and from the local bus.

The leads and corresponding interface signals exchanged by block 12 with MP7 (through MMU9 and CACHE 10) are shown on the upper side of block 12. The leads/signal interfacing with local bus are shown on the lower side of block 12.

For sake of clearness and concision the only signals are shown, which are usefull for understanding the invention and which are required for performing the above mentioned operations.

The following list gives the meaning of the several signals:

DBUS: data in input/output from MP7

ABUS: real or physical addresses in output from MMU9

R/W: read command (R/W asserted) or write command (R/W deasserted) from MP7 through cache 10.

AS: address strobe signal output from cache 10 and validating addresses and commands when asserted.

CK: periodic timing signal in output from unit 6

STERM: signal to MP7 indicating a performed write operation or data availability within the next following CK signal in case of read operation.

SBBSY: in output from block 21 indicates that block 21 is busy and cannot accept commands.

LBB: data in input/output on the local bus.

LBA: addresses output on the local bus.

LBR/W: read/write command on local bus

MPSB: signal output by block 12 indicating that block 22 and system bus are selected.

MPDIR: signal output by block 12 indicating that the directory 14 is selected.

ENCPU: signal from arbiter 13, enabling block 12 to get access to the local bus.

ENRLM: signal from arbiter 13 indicating that the local memory is enabled to reconnect to the local bus for transferring data read out from local memory.

ENRSB: signal from arbiter 13 enabling the system bus, via block 21, to reconnect to the local bus for transferring a data read out from a space external to the CPU.

DIRBSY: signal indicating that directory 14 is busy and cannot be D accessed from local bus.

Block 12 further receives (right side of fig. 3) some signals CPU0A,CPU1A,CPU2A,CPU3A which define the active state (when asserted) or inactive state (when deasserted) of the several CPUs.

The gates 17 are enabled in output towards local bus by signal MPSB or by signal MPDIR in AND with signal R/W deasserted.

The gates 17 are enabled in output towards local bus by signal R/W asserted.

The gates 18 are enabled by MPSB or by MPDIR.

Block 12 obtains access to local bus by default, that is ENCPU is asserted by arbiter 13 if no other access requests to local bus are asserted and if the local bus is free.

The operation of block 12 and logical network 20 is described by the following equations for the operative cases relevant to the invention understanding.

In the equations, the letter $\underline{N}$ preceding the name of a signal is a negation or inversion symbol.

A) Directory write operation

$$MPDIR= ENCPU.AS.A31.\underline{N}A30.A29.\underline{N}DIRBSY$$

This equation indicates that block 12 gets access to local bus 11 and selects block 22 for writing in the directory 14, if the arbitrator 13 grants access to local bus, if the address references the directory space as destination and if the directory can accept commands.

$$STERM = MPDIR.\overline{N}R/W$$

This equation indicates that STERM is asserted and confirms the posting of the write command to MP7 as soon as the command has been posted.

B) Global data write operation.

$$MPSB = ENCPU.AS.\overline{N}R/W.A28.A31.\overline{N}A30.\overline{N}A29.CPUMA.\overline{N}SBBSY$$

This equation indicates that block 12 gets access to local bus and selects block 21 if the operation to be performed is a write operation related to global data and if block 21 can receive commands (SBBSY deasserted) and further if the system environment is effectively a multiprocessor environment (CPUMA asserted). CPUMA is a signal indicating that at least two CPUs are active in the system. For example CPUMA may be obtained in accordance with the following equation:

$$CPUMA = CPU0A.(CPU1A+CPU2A+CPU3A)+CPU1A.(CPU2A+CPU3A)+CPU2A.CPU3A$$

It is clear that in monoprocessor environment as it may result from the circumstance that one CPU only is active in the system, the global data are preferably treated as local data, with direct access to local memory even in case of write operation.

As soon as the write command is posted in block 21 the STERM signal is generated according to the following equation:

$$STERM = MPSB.\overline{N}R/W$$

Figure 4 shows in block diagram the interface and arbitration unit 23, block 21 and the interconnections between the two units, between the block 21 and the local bus on the upper side and between blocks 21,23 and system bus, auxiliary bus on the right side.

Block 21 exchanges data LBD with local bus 11, receives addresses and commands LBR/W, MPSB, ENRSB and output signals SBRQ (to arbitrator 13), SBBSY (to arbitrator 13 and block 12).

Block 21 further receives the timing signal CK from unit 6 (Fig. 1) and the signals CPU0A,CPU1A,CPU2A,CPU3A, from the auxiliary bus 15.

Block 21 exchanges data (DSBUS) with the interface unit 23, outputs addresses (ASBUS), two mutually exclusive signals MEMSEL,I/OSEL (characterizing the operation to be performed), two distinct commands read command (R) and write command (W) and receives a signal WAIT (indicating that the requested operation is in course and which is deasserted, in case of read operation, immediately before the data availability and in case of write operation as soon as the data to be written has been put on the system bus) and a signal REFADDR enabling the transfer of an address on the system bus.

These are the only signals needed in the case, considered here, that the interface unit 23 essentially consists in a message passing coprocessor MPC manufactured as integrated circuit by the INTEL firm. Such coprocessor is described in the specifications MPC USER MANUAL, 1986 Intel Corporation, Santa Clara California.

Such specifications are referenced for more detailed information on the component.

Unit 23 comprises, in addition to coprocessor MPC 43, a set of control gates 46 which connect the coprocessor to the system bus 5 and which are controlled by the coprocessor.

Coprocessor 43 comprises two registers 44,45 latching the data exchanged with block 21.

Once activated (by the assertion of MSEL or I/O SEL) it manages in autonomous way the arbitration and communication protocol of the system bus.

Block 21 comprises a set of tranceivers 27, which control the connection of the local data channel LBD to the data channel DSBUS, an address latching register 25, a finite state logic 26 for generating control signals, a combinatory network (decoder) 41, connected to the output of register 25 and modifying the addresses in output from register 24 and a set tristate, isolation gates 42, having inputs connected to the outputs of decoder 41 and outputs connected to the system bus I/O ports of processor 43.

The following equations describes the conditions which cause the generation of the several control signals, which control a global data write operation, the only one of interest here.

$$MEMSEL = MPSB.LBA28.LBA31.\overline{N}LBA30.\overline{N}LBA29$$

$$W = \overline{N}LBR/W.MPSB.CK+W.SBBSY$$

$$SBBSY = MPSB.CK+SBBSY.\overline{N}REFADDR+SBBSY.WAIT$$

These equations are imposed by the timing requirements of the MPC coprocessor: MEMSEL must be asserted before the W command an W must remain asserted until deassertion of the WAIT signal.

WAIT is asserted with some delay as to receipt of the MEMSEL signal by coprocessor.

Hence two self sustainance terms are needed to hold SBBSY asserted.

The gates 27 are enabled in output to block 23 by signal EN1=MPSB and in input to local bus 11 by signal EN2=ENRSB.

Register 25 is loaded by a command LD=MPSB.CK and the gates 42 are enabled by the assertion of REFADDR from MPC with the timing imposed by the system bus protocol.

The decoder 41 changes, in case of global data write operation, the address referencing an internal memory space in an address referencing an external memory space, specifically a memory space related to a processor CPUK other then the processor including decoder 41.

The CPUK is choosen among the active ones.

The suffix M in the following equations indicates a modified address bit.

$$A31M = A31.A29 + A31.A30$$

(A31 is set to 0 only if both bits A29 and A30 are zero)

$A29M = A29 + A28.A31.\overline{N}A29.\overline{N}A30.CPU1A.\underline{N}\#1 + A28.A31.\overline{N}A29.\overline{N}A30.CPU3A.\underline{N}\#3$ $A30M = A30 + A28.A31.\overline{N}A29.$ $\overline{N}A30.CPU2A.\overline{N}CPU1A.\underline{N}\#2 + A28.A31.\overline{N}A29.\overline{N}A30.CPU3A.\underline{N}\#3$ #0,#1;#2;#3 are signals asserted only in the processor which has the corresponding ordering number: this number may be assigned in well known way by an initialization procedure or simply by position of the several CPUs in a system housing.

The last two equations indicates that if the address in input and output from register 25 is not related to global data, the original bits A29,A30 are not changed.

If the address is related to global data, the original bits A29,A30 are zeroes, but are changed, depending on the active state of the several CPUs, and the number #Z of the agent CPUZ, so as to reference the memory space of a local memory in an active CPUK other than the agent. In case of global data write operation, block 21 asserts MEMSEL and sets in busy state by asserting SBBSY until block 23 deasserts WAIT. Block 23, once gained access to the system bus, asserts REFADDR and transfers the modified address, referencing another CPU, on the system bus.

Once the data has been transferred over the bus and confirmation has been received by the replying CPU, block 23 in the agent CPU deasserts WAIT.

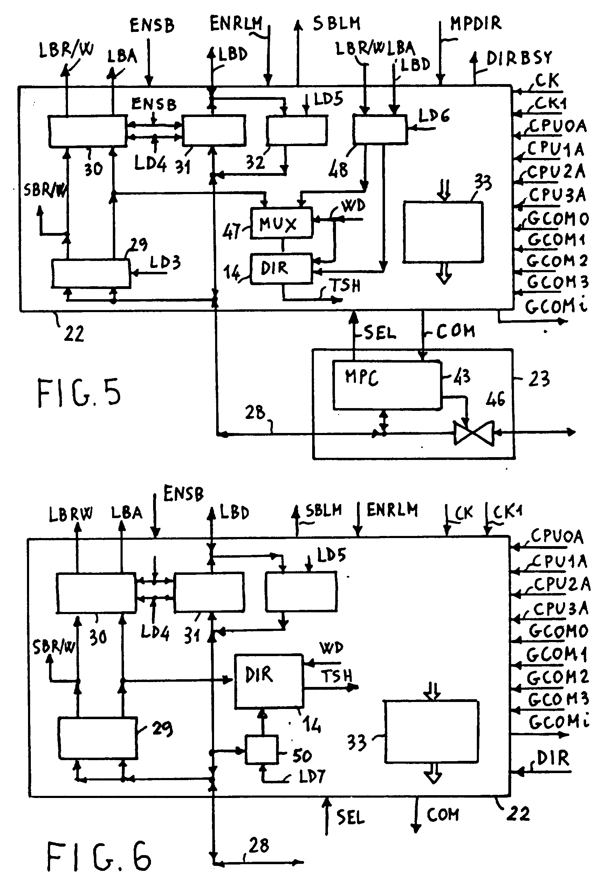

As it will be seen in the following it is a task of block 22 in all CPUs to control the execution or the trapping of the write operation. Figure 5 shows in block diagram the interface and arbitration unit 23, the block 22 and the interconnections of the two blocks as well the interconnections with local bus on one side and system bus, auxiliary bus on the other.

As already indicated, the interface unit 23 comprises the coprocessor MPC 43 and the transceivers 46.

The leads of the system bus intended for transferring data, addresses and commands, are connected, through such transceivers, to both block 43 and, by means of a channel 28, to block 22.

Channel 28 forms a bypass channel of the coprocessor 43.

Block 22 comprises a buffer register 29 for latching addresses and commands received from the bypass 28, an address and command register 30 downstream of register 29 and having the outputs connected to the local bus 11, a data registers 31 for data input to the local bus from the bypass channel 28, a data register 32 for data input to the bypass channel 28 from the local bus 11, a finite state logic 33 for generating control signals based on signals received from local bus, unit 43, bypass channel 28 and auxiliary bus 15.

Block 22 further comprises the directory 14, which is preferably a static RAM having a capacity of 64 kbit.

The directory 14 is addressed, through a multiplexer 47, by a page address latched either in register 29 or in page address register 48 having inputs connected to the local bus. The same register 48 is used to latch the read/write command LBR/W present on the local bus, and a local bus data bit 1/O to be written in directory or RAM 14.

Block 22 receives, from coprocessor 43, an activation signal SEL for the execution of a read/write command put on the system bus.

Coprocessor 43 receives, from block 22, a signal COM, which indicates that block 22 is ready to complete the requested operation.

Block 22 exchanges, with local bus 11, data LBD (in output from register 31 or in input to register 32), addresses LBA (in output from register 30 or in input to register 48), outputs signals LBR/W,SBLM, DIRBSY directed to the local bus and receives commands ENSB, ENRLM (from arbitrator 13) and MPDIR (from block 12).

Block 22 further receives periodical signals CK and CK1 from the timing unit 6.

CK1 is used for timing the operation of the system bus.

In addition block 22 exchanges some signals with the auxiliary bus 15. Such signals will be considered in the following.

For an easier understanding of the operation and structure of block 22 it is preferable to first consider the case in which coprocessor 43 acts as "replier".

As it is known coprocessor 43 continuosly monitors the signals on the system bus and is capable of distinguishing the several phases of arbitration, control and data exchange in course over the system bus. It is further capable of detecting address fields, in particular bits A31,A30,A29, which may reference it as interface of a destination space.

When detecting such situation, coprocessor 43 asserts signal SEL and activates block 22.

SEL remains asserted until completion of the handshaking procedure on the system bus.

In order to complete the handshaking procedure the coprocessor 43 needs to receive command COM asserted from block 22.

Register 29 in block 22 may be defined as a freezing register for a transient situation occurring on the system bus, that is the control phase or cycle during which addresses and commands are present on the system bus.

The cycle is characterized by a bus signal BSCO asserted.

The loading command for register 29 is given by

$$LD3=BSC0.CK1$$

The information loaded in register 29 remains latched until a new assertion of BSCO.

The loading operation of register 29 is independent of signal SEL and is the consequence of the protocol occurring on the system bus, any time an agent interacts with a replier.

Therefore register 29 is loaded in the interface unit of all CPUs and peripheral units connected to the system bus.

Register 30 and 31 are instead loaded by a command LD4 given by equation:

$$LD4=SEL.\overline{N}BSY.\overline{N}SEL1.\overline{N}TRASH \qquad (1)$$

hence only if coprocessor 43 detects the address present on the system bus ad related destination space (and consequently asserts SEL) and if the other terms of the equation are asserted.

The SEL assertion occurs when, in case of a write operation, the data to be written is already present on the system bus in lieu of the address.

BSY indicates that registers 30,31 (enabled in output by ENSB) are already busy and is defined by the equation.

$$BSY=LD4+BSY.ENSB.CK$$

This equation indicates that BSY is asserted with the assertion of LD4 and self sustains until block 22 receives, from arbitrator 13, signal ENSB, synchronized by CK signal.

SEL1 is an auxiliary signal given by the equation:

$$SEL1=SBLM+SEL1.\overline{N}(\overline{N}SEL.CK1) \qquad (2)$$

SEL1 is asserted with the assertion of the signal SBLM requesting connection of block 22 to local bus and self sustains until the first system bus clock CK1 during which SEL is deasserted.

In this way the term $\overline{N}SEL1$ in equation (1) assures that register 30,31 do not change their status until SEL is certainly deasserted, even if BSY has been deasserted.

The term $\overline{N}TRASH$ subjects the assertion of command LD4 to the fact that the address present in register 29 is not related to a trashed global data page.

The directory 14 is addresses, through multiplexer 47, by a page address stored in register 29, when multiplexer 47 is controlled by a signal WD deasserted (signal WD will be considered in the following). If the page address stored in register 29 is related to a trashed page, the directory 14 outputs a signal TSH asserted, which is meaningful only for global data pages).

Therefore TRASH is given by the following equation:

$$TRASH = TSH.A28.\overline{N}A31$$

Signal SBLM requesting access to the local bus is given by SBLM=BSY hence coincides with BSY.

It is therefore clear that in case of operation involving global data which have been trashed in the CPU acting as a replier, the read or write operation is trapped and does not affect the local bus.

In case of trapped read operation, register 22, even if not loaded with data read out from local memory (by CL command LD5=ENRLM.SBR/W.CK), provides any how some data even if not meaningful to the system bus, through channel 28 and gates 46, thus allowing completion and checking of the system bus protocol.

Signal SBR/W is given by SBR/W=BSC6.

BSC6 is a control signal present on the system bus during the command phase and is latched in register 29.

If BSC6 (SBR/W) is asserted, it indicates that the requested operation is a read operation. SBR/W enables in output the register 32.

In order to complete the communication protocol on the system bus the signal COM must be asserted.

In case of untrapped read operation or local data write operation COM is given by the equation:

$$COM=SBLM.\overline{N}SBR/W.\overline{N}A28.\overline{N}A31+ENRLM.SEL1.\overline{N}BSY.SBR/W+COM.SEL1$$

This equation indicates that COM is asserted as soon as access request to local bus SBLM is asserted in case of a write operation related to local data and as soon as block 22 receives the reconnect enable signal ENRLM in case of read operation.

Signals SEL1 asserted and $\underline{N}$BSY provide a block 22 status indication (read request issued and read operation pending) which enable to detect ENRLM as a response to the read request.

COM is self sustaining until SEL1 becomes deasserted.

In case of trapped read operation COM is given by the equation:

$$COM=TRASH.SEL.SBR/W$$

In case of global data write operation COM is generated according to an equation which will be seen next.

The operation of block 22 is now considered in the case a global data write request is detected, based on the contents of register 29.

The operation is the same irrespective of the circumstance that block 23 acts as "replier" or not.

In this case control signal LD4 is given by the equation.

$$LD4=A28.\underline{N}A31.\underline{N}BSY.\underline{N}SEL1.\underline{N}BSCO.CK1.\underline{N}SBR/W.\underline{N}TRASH$$

In other words LD4 is asserted even if control signal SEL is not asserted, provided the write operation is not trashed.

LD4 generates signals BSY and SBLM according to the already seen equations.

In every unit 22i where SBLMi has been asserted, the assertion of signal ENSBi causes the generation of a signal

$$GCOMi=A28.\underline{N}A31.ENSBi+GCOMi.\underline{N}GLOBACK$$

where $GLOBACK=(GCOMO+\underline{N}\#0).(GCOM1+\underline{N}\#1).(GCOM2+\underline{N}\#2).(GCOM3+\underline{N}\#3)$

In other words GCOMi is asserted on receipt of ENSBi and self sustains untill each block 22 has received confirmation from all actives CPUs that the write operation has been posted.

The confirmation is provided by signal GLOBACK.

In the CPUs where the write operation has been trapped GCOMi is given by: $GCOMi=TRASH.A28.\underline{N}A31.\underline{N}SBR/W$ and self sustains until the contents of register 29 are modified.

Signal GLOBACK is used to assert signal COM in case of global data write operation according to the equation:

$$COM=\underline{N}SBR/W.GLOBACK+COM.SEL1$$

In this case COM is asserted with the posting of the global write operation (unless trapped) in all the active CPUs and self sustains, in the CPU which acts as replier, until SEL is deasserted (equation 2). In the other CPUs where the write operation has been posted, COM self sustains until receipt of signal CK1 next following deassertion of ENSB and SBLM (always in accordance with equation 2) because in these CPUS SEL has not been asserted (hence is deasserted).

In those CPUs where the write operation has been trapped, COM is deasserted with GLOBACK deassertion because SEL1 has not been asserted. As incidental remark it may be noted that in case of global data write operation every block 22 sends a signal COM asserted to the related interface unit 43.

However this signal is meaningful to the only unit acting as a replier and is ignored by all the others.

The operations which lead to writing of the directory 14 are now considered.

Writing of the directory must not interfere with the control function performed by the directory.

The control function is meaningful and required only in case of global data write operations requested through the system bus.

In the course of such operations interference must be avoided only in the time period running from the loading of register 29 and the assertion of LD4 or COM (in case of trapped operations).

Therefore logic circuits 33 in block 22 provide for the internal generation of a signal

$$INTF=A28.\underline{N}A31.\underline{N}SBR/W.CK1.BSC0+INTF.\underline{N}(CK1.\underline{N}BSCO)$$

INTF is asserted with the loading of register 29 only in the case of global data write operation detected on the system bus and self sustains until the next following assertion of CK1 signal.

As a consequence INTF is asserted or deasserted for full periods of the clock CK1 and $\underline{N}$INTF and CK1 may be used for timing write operations of the directory 14.

The register 48 is loaded by a command LD6=MPDIR.CK and block 22 generates signal DIRBSY according to the following equation:

$$DIRBSY=LD6+DIRBSY.DIRBSY1+DIRBSY.WD+DIRBSY.\underline{N}CK1$$

DIRBSY1 is an auxiliary signal given by

$$DIRBSY1=DIRBSY.CK1+DIRBSY1.\underline{N}WD$$

where WD is a directory write command, which further control the multiplexer 47 and is given by

$$WD=DIRBSY.DIRBSY1.\underline{N}INTF.\underline{N}CK1$$

DIRBSY self sustains, thanks to the several self sustaining terms, until occurred execution of the write operation.

This operation is performed without interference with system bus accesses to the directory, being deferred, if required, until the CK1 clock cycle in which INTF is deasserted.

The write operation is performed in the second half period of clock CK1, in which INTF is deasserted (and obviously CK1 is deasserted too). If DIRBSY is asserted in the first half period of a CK1 period in which INTF is deasserted, the operation is performed in that period.

If DIRBSY is asserted in the second half period, the operation is deferred to subsequent periods.

The preceding description is related to a preferred embodiment of the circuits for writing the directory 14.

This embodiment has the advantage of controlling directory 14 write operations without having access to the system bus, which is a critical resource to be used only if strictly needed.

This implies that write operations do not have to interfere with global data write operation commands which may be simultaneously present on the system bus.

However to avoid interference, the directory 14 may be written through the system bus: if the system bus is busy in order to control a directory write operation, the interference with global data write operations commands on the system bus is excluded.

This leads to a simpler embodiment which is shown in fig. 6.

This embodiment has the drawback of requiring access to the system bus.

Figure 6 shows block 22 and differs from the embodiment of fig. 5 in that the directory 14 has address inputs directly connected to the output of register 29.

Register 48 is not needed and is not present.

A one bit register or flip flop 50 is connected to channel 28 to receive the one bit information to be written in directory 14.

Block 22 is not activated by command MPDIR nor it has to generate signal DIRBSY towards block 12.

Selection of block 22 is performed by a command DIR generated by block 21 (fig. 4).

For writing in the directory 14, the processor MP7 generates a write command coupled to an address where bits A31,A30,A29 (and if required others bits) references the directory space, as destination space. This address and write command is received by block 12 which accordingly generates command MPSB and posts the command in block 21. Block 21 may therefore obtain access to the system bus, by activating block 23 as agent with a signal I/O SEL and forwarding the write command on the system bus to a "replier" which may be the CSM (a unit always present and active in the system configuration.

Selection of the central service module CSM is obtained by modifying if required the address received by block 21 (by means of decoder 41) in an address which references the CSM.

Only 16 address bits which refer to one among 64 K entries of directory 14 (which bits may be selected at will) need to remain unchanged.

Block 21 further generates, towards block 22, the signal DIR according to the following equation:

$$DIR=W.REFADDR.A31.\underline{N}A30.A29.CK1+DIR.WAIT$$

In view of the assumption made, bits A31,A30,A29 references the directory space and signals W, REFADDR and WAIT have the meaning already considered.

Therefore DIR is asserted when block 23 has already gained access to the system bus (REFADDR is asserted), and at the first occurrence of clock CK1 and self sustains until deassertion of signal WAIT.

Logic network 33, triggered by DIR generates a loading command LD7 for loading register 50.

LD7 is given by the following equation:

$$LD7=DIR.\underline{N}BSC0.CK1$$

The write command WD for directory 14 is given by equation

$$WD=DIR.\underline{N}BSC0.CK1$$

The central service module CSM, which is involved in the operation as replier for completion of the system bus protocol, may trap and ignore the requested write operation.

The preceding description is tailored to a system embodiment where a standard bus MULTIBUS II is used, together with integrated circuits such as the coprocessor MPC.

It is however clear that several changes can be made depending on system bus requirements and related interface circuits which are used. Moreover the concept of page trashing is not limited to any specific size of the page, which for the purpose of the invention may be any set of bytes and not necessarily 4Kbytes.

## Claims

1. Multiprocessor system having selective global data replication, comprising a plurality of central processing units (CPUs) (1,2,3,4) each provided with a processor (7) a local memory (8) and an interface unit (16) communicating each with the other through a related local bus (11), a system bus (5) through which each interface unit (16) of a CPU and the related CPU may communicate with the interface unit (16) of another one whatsoever of said CPUs or another unit whatsoever (100,101,102) connected to said system bus (5) and provided with a related interface unit, and means (21,23) in said interface unit of each of said CPUs for transferring on said system bus (5) a global data write command including an address and a page address within said address, characterized in that said interface unit (16) of each said CPUs comprises:

   - a directory (14) addressed from said system bus (5) with said page address and storing information which indicates for each page of global data if said page has to be replicated in the local memory of the related CPU or not, and
   - means (29,33) responsive to a global data write command, detected on said system bus (5) and to an information read out from said directory (14), addressed with said page address of said detected global data write command, said information indicating that said write command is related to global data of a page which must not be replicated in the local memory (8) of the CPU related to said directory (14) for preventing said write command from being transferred to said related local bus (11) and related local memory (8).

2. System as in claim 1 where said interface unit (16) comprises means (33) for generating a global data write operation performed signal (GCOMi) on detection of a global data write operation command on said system bus as related to global data not to be replicated.

3. System as in claim 1 where each CPU comprises means (33,48) for performing write operations in the related directory (14) in time periods during which no global data write command operations are in progress on said system bus.

4. System as in claim 1 where each CPU (1,2,3,4) comprises means (12,21,22,23) for controlling write operations of the related directory (14) through said system bus.


## Patentansprüche

1. Multiprozessorsystem mit selektiver Globaldaten-Reproduktion mit folgenden Merkmalen: einer Mehrzahl von zentralen Verarbeitungseinheiten (CPUs) (1, 2, 3, 4), wobei jede mit einem Prozessor (7), einem lokalen Speicher (8) und einer Schnittstelleneinheit (16) versehen ist, die untereinander durch einen zugehörigen lokalen Bus (11) kommunizieren, einem Systembus (5), durch welchen jede Schnittstelleneinheit (16) einer CPU und die zugehörige CPU mit der Schnittstelleneinheit (16) irgendeiner anderen der CPUs oder irgendeiner anderen Einheit (100, 101, 102), die mit dem Systembus (5) verbunden ist und mit einer zugehörigen Schnittstelleneinheit versehen ist, kommunizieren kann, und einer Einrichtung (21, 23) in der Schnittstelleneinheit jeder CPU zum Übertragen eines Globaldaten-Schreibebefehls, der eine Adresse und eine Seitenadresse innerhalb der Adresse aufweist, auf den Systembus (5), dadurch gekennzeichnet, daß die Schnittstelleneinheit (16) jeder der CPUs folgende Merkmale aufweist:

   - ein Verzeichnis (14), das von dem Systembus (5) mit der Seitenadresse adressiert wird und Informationen speichert, welche für jede Seite der Globaldaten anzeigen, ob die Seite in dem lokalen Speicher der zugehörigen CPU reproduziert werden muß oder nicht, und

   - eine Einrichtung (29, 33), die auf einen Globaldaten-Schreibebefehl, der auf den Systembus (5) erfaßt worden ist und auf Informationen die aus dem Verzeichnis (14) gelesen worden sind, anspricht, welches mit der Seitenadresse des erfaßten Globaldaten-Schreibebefehls adressiert ist, wobei die Informationen anzeigen, daß der Schreibebefehl zu Globaldaten einer Seite gehört, welche in dem lokalen Speicher (8) der CPU, die zu dem Verzeichnis (14) gehört, nicht reproduziert werden darf, zum Verhindern, daß der Schreibebefehl in den zugehörigen lokalen Bus (11) und den zugehörigen lokalen Speicher (8) übertragen wird.

2. System gemäß Anspruch 1, bei dem die Schnittstelleneinheit (16) eine Einrichtung (33) zum Erzeugen eines Globaldaten-Schreibeoperation-Vollendet-Signals (GCOMi) beim Erfassen, daß ein Globaldaten-Schreibeoperationsbefehl auf dem Systembus zu Globaldaten gehört, die nicht reproduziert werden sollen, aufweist.

**3.** System gemäß Anspruch 1, bei dem jede CPU eine Einrichtung (33, 48) zum Durchführen der Schreibeoperationen in dem zugehörigen Verzeichnis (14) in Zeitperioden aufweist, während denen keine Globaldaten-Schreibebefehlsoperationen auf dem Systembus ablaufen.

**4.** System gemäß Anspruch 1, bei dem jede CPU (1, 2, 3, 4) eine Einrichtung (12, 21, 22, 23) zum Steuern von Schreibeoperationen des zugehörigen Verzeichnisses (14) durch den Systembus aufweist.


**Revendications**

**1.** Système multiprocesseur ayant une reproduction sélective des données globales, comprenant un ensemble d'unités centrales de traitement (UC) (1, 2, 3, 4), ayant chacune un processeur (7), une mémoire locale (8) et une unité d'interface (16) communiquant les unes avec les autres par l'intermédiaire d'un bus local (11) associé, un bus de système (5) par l'intermédiaire duquel chaque unité d'interface (16) d'une UC et l'UC associée peuvent communiquer avec l'unité d'interface (16) de n'importe laquelle des UC, ou de n'importe quelle autre unité (100, 101, 102) connectée au bus de système (5) et munie d'une unité d'interface associée, et des moyens (21, 23) dans l'unité d'interface de chacune des UC pour transférer sur le bus de système (5) un ordre d'écriture de données globales comprenant une adresse et une adresse de page dans cette adresse, caractérisé en ce que l'unité d'interface (16) de chacune des UC comprend :

- un répertoire (14) adressé à partir du bus de système (5) avec l'adresse de page, et enregistrant une information qui indique, pour chaque page de données globales, si cette page doit être reproduite ou non dans la mémoire locale de l'UC associée, et
- des moyens (29,33) réagissant à un ordre d'écriture de données globales, détecté sur le bus de système (5), et à une information qui est lue dans le répertoire (14), adressé avec l'adresse de page de l'ordre d'écriture de données globales détecté, cette information indiquant que l'ordre d'écriture concerne des données globales d'une page qui ne doivent pas être reproduites dans la mémoire locale (8) de l'UC associée à ce répertoire (14), en empêchant le transfert de l'ordre d'écriture vers le bus local (11) associé et la mémoire locale (8) associée.

**2.** Système selon la revendication 1 dans lequel l'unité d'interface (16) comprend des moyens (33) pour générer un signal d'accomplissement d'opération d'écriture de données globales (GCOMi) au moment de la détection d'un ordre d'opération d'écriture de données globales sur le bus de système, en relation avec des données globales qui ne doivent pas être reproduites.

**3.** Système selon la revendication 1, dans lequel chaque UC comprend des moyens (33, 48) pour accomplir des opérations d'écriture dans le répertoire (14) associé, pendant des intervalles de temps au cours desquels aucune opération d'ordre d'écriture de données globales n'est en cours sur le bus de système.

**4.** Système selon la revendication 1, dans lequel chaque UC (1, 2, 3, 4) comprend des moyens (12, 21, 22, 23) pour commander des opérations d'écriture du répertoire associé (14), par l'intermédiaire du bus de système.

FIG.1

| 31 | 30 | 29 | 28 | 27 | | 12 | 11 | | 0 |
|---|---|---|---|---|---|---|---|---|---|
| I | P # | G | | PAGE # | | | OFFSET | | |

FIG.2

FIG.3

FIG.4

FIG. 5

FIG. 6

16